# EUROPEAN PATENT APPLICATION

(11) **EP 2 341 667 A2**
(43) Date of publication of application: **06.07.2011**
(21) Application number: 10196536.6
(22) Date of filing: 22.12.2010
(51) Int. Cl.: H04L 12/28

(54) **Device control bus command translation for noncompliant and incompatible devices**

(30) Priority: 30.12.2009 US 650168
(71) Applicant: Eldon Technology Limited, Steeton, Keighley BD20 6QW (GB)
(72) Inventor: Ward, Martyn Ross, Bingley, West Yorkshire BD16 4PJ (GB); Dove, Anthony Michael, Bradford, West Yorkshire BD13 2LP (GB); Hall, Neale Alan, Keighley, West Yorshire BD20 0XN (GB)
(74) Representative: Sadler, Peter Frederick

(57) **Abstract**

A method of facilitating consumer device control bus functionality in an entertainment system is presented. In the method, a consumer device control bus command is received from a first electronic device. The control bus command is translated into a wireless remote control command compatible with a second electronic device. The wireless remote control command is transmitted to the second electronic device. A consumer device control command translation device, as well as a consumer electronics device providing related capability, is also provided.

## Description

The typical home entertainment system often includes multiple interconnected electronic components configured to enhance a user's enjoyment of audio/video content, such as movies, sporting events, music, and the like. For example, a home entertainment system including a television, a television receiver or set-top box, and a digital versatile disc (DVD) player may allow a user to view various types of entertainment from multiple sources. In this case, the user may view live broadcast television programming, such as from a cable or satellite television content provider, as well as watch DVD-based content, from the same television. The addition of other system components, such as a standalone digital video recorder (DVR), compact disc (CD) player, or audio receiver and connected speakers, may allow further flexibility in enjoying audio and/or video content.

To enjoy a particular source of entertainment, such as broadcast television, DVD content, and the like, the components of the system required to deliver content that specific source must be powered on and configured appropriately. For example, to view broadcast television content, the television input corresponding to the set-top box must be selected, or the appropriate channel of the television tuner must be chosen, depending on how the set-top box and the television are connected to each other. Oftentimes, a user employs a separate remote control device associated with each component to place the system in the desired configuration. More recently, users have utilized "universal" remote control devices capable of controlling more than one electronic device to configure the system. Some universal remote controls require the user to place the remote in a mode corresponding to the device before issuing remote commands to that particular device. More sophisticated universal remote control devices may allow multiple commands to be issued to the different components by way of a single button press, such as to turn on or off the components.

More recently, manufacturers of electronic devices employing the High Definition Multimedia Interface (HDMI®) have begun utilizing a portion of the associated HDMI standard called Consumer Electronics Control (CEC). Generally, CEC employs a wire of each HDMI cable interconnecting the various entertainment system components as a control bus, thus allowing commands received by one component, such as those received from a remote control device for that component, to be transferred to other devices of the entertainment system. Thus, a single command from a remote control device may cause the electronic device that receives the command to transfer that command and/or others to other system components connected to the receiving component via the HDMI cabling to configure the system as desired. For example, a user desiring to watch a DVD may push a "play" button on a remote control configured to communicate with a television. In response, the television may receive the command, set its input to receive audio/video data from a DVD player connected to the television via HDMI, and then issue a command over the HDMI to the DVD player to power up and begin playing the loaded DVD. If an HDMI CEC-complaint audio receiver is also included in the system, the television may also forward a command to the receiver to turn on the receiver and select the DVD player as an input so that audio associated with the DVD may be routed to the receiver and played over attached speakers.

Restricting widespread use of the HDMI CEC functionality is the fact that many devices still being employed in the typical household entertainment system either do not include an HDMI connector, or provide such a connector but do not support CEC functionality. In other cases, one or more devices within a single entertainment system that provide an HDMI connector may not employ the same CEC functionality, thus rendering communication between such devices difficult.

### SUMMARY OF THE INVENTION

The invention is defined in the claims to which reference is now directed. Preferred features are set out in the dependent claims.

Embodiments of the invention may provide a method of facilitating consumer device control bus functionality, the method comprising the steps of: receiving a consumer device control bus command from a first electronic device; translating the consumer device control bus command into a wireless remote control command compatible with a second electronic device; and transmitting the wireless remote control command to the second electronic device.

Embodiments of the invention may include a consumer device control command translator, comprising: a wired media content interface; a wireless remote control interface; and control circuitry, the control circuitry being configured to: receive, preferably from a first electronic device via the wired media content interface, a control command; translate the control command into a wireless remote control command; and transmit the wireless remote control command via the wireless remote control interface to a second electronic device. Preferably, the wired media content interface, the wireless remote control interface, and the control circuitry may be incorporated within the first electronic device.

Embodiments of the invention may include a consumer electronics device comprising: a wired media content interface configured to transfer media content to or from a second consumer electronics device; a wireless remote control interface; and control circuitry configured to: generate a wireless remote control command for a second consumer electronics device; and transmit the wireless remote control command via the wireless remote control interface to the second consumer electronics device. Preferably the control circuitry is configured to receive a user command via the wireless remote control interface, and to generate the wireless remote control command based on the user command.

### BRIEF DESCRIPTION OF THE DRAWINGS

Many aspects of the present disclosure may be better understood with reference to the following drawings. The components in the drawings are not necessarily depicted to scale, as emphasis is instead placed upon clear illustration of the principles of the disclosure. Moreover, in the drawings, like reference numerals designate corresponding parts throughout the several views. Also, while several embodiments are described in connection with these drawings, the disclosure is not limited to the embodiments disclosed herein. On the contrary, the intent is to cover all alternatives, modifications, and equivalents.

Fig. 1 is a simplified block diagram of a consumer device command translator according to an embodiment of the invention.

Fig. 2 is a flow diagram of a method according to an embodiment of the invention of facilitating consumer device control bus functionality.

Fig. 3 is a block diagram of a standalone consumer device command translator according to an embodiment of the invention.

Figs. 4A through 4D depict various operational modes in which the translator of Fig. 3 may be employed according to embodiments of the invention.

Fig. 5 is a block diagram of a consumer electronics device providing wireless command transmission functionality according to an embodiment of the invention.

Figs. 6A through 6D depict various operational modes in which the consumer electronics device of Fig. 5 may be employed according to embodiments of the invention.

### DETAILED DESCRIPTION

The enclosed drawings and the following description depict specific embodiments of the invention to teach those skilled in the art how to make and use the best mode of the invention. For the purpose of teaching inventive principles, some conventional aspects have been simplified or omitted. Those skilled in the art will appreciate variations of these embodiments that fall within the scope of the invention. Those skilled in the art will also appreciate that the features described below can be combined in various ways to form multiple embodiments of the invention. As a result, the invention is not limited to the specific embodiments described below, but only by the claims and their equivalents.

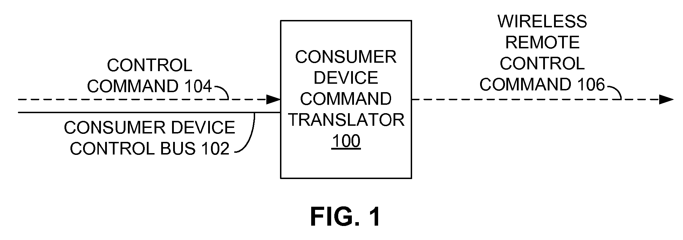

Fig. 1 is a simplified block diagram of a consumer device command translator 100 according to an embodiment of the invention. As is described more fully in conjunction with the several examples presented below, the translator 100 may be embodied as a standalone translator device coupling an originating consumer electronics device with a target consumer electronics device, or may be incorporated within the originating consumer electronics device. Such consumer devices may include, but are not limited to, satellite, cable, and terrestrial ("over-the-air") television set-top boxes, satellite and terrestrial radio receivers, televisions, DVR units, CD and DVD players, and gaming systems.

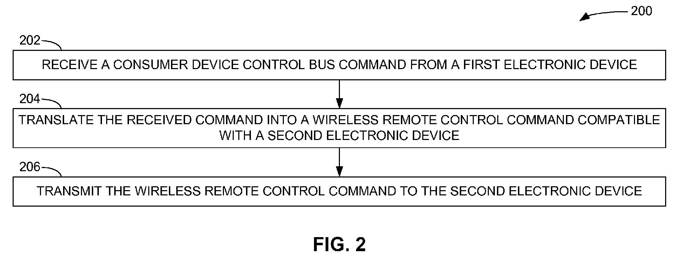

Fig. 2 presents a method 200 of facilitating consumer device control bus functionality via the translator 100 of Fig. 1. In the method 200, the translator 100 receives a consumer device control bus command 104 from a first electronic device via a consumer device control bus 102 (operation 202). As indicated above, the translator 100 may be incorporated within the first electronic device in some examples. The translator 100 may then translate the received command 102 into a wireless remote control command 106 compatible with a second electronic device (operation 204), and transmit the wireless command 106 to the second electronic device (operation 206), which may then execute, perform, or otherwise process the wireless command 106.

While the operations of Fig. 2 are depicted as being executed in a particular order, other orders of execution, including concurrent or overlapping execution of two or more operations, may be possible. In another embodiment, a computer-readable storage medium may have encoded thereon instructions for a processor or other control circuitry of the translator 100 of Fig. 1 to implement the method 200.

One example of the wired consumer device control bus 102 is the portion of the High Definition Multimedia Interface (HDMI) incorporating the Consumer Electronics Control (CEC) standard. In such embodiments, the translator 100 may allow CEC commands to be delivered to, and executed by, consumer devices that either do not support HDMI at all, or support HDMI media content delivery but do not specifically incorporate HDMI CEC functionality. Other implementations of the translator 100 may provide similar capability for types of wired media content control bus technology other than that provided by the HDMI CEC standards. Additional advantages may be recognized from the various implementations of the invention discussed in greater detail below.

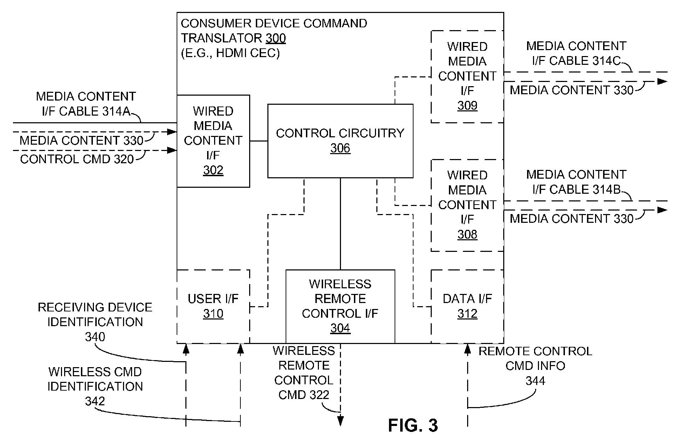

Fig. 3 provides a block diagram of a standalone consumer device command translator 300 according to an embodiment of the invention. The translator 300 includes a wired media content interface 302, a wireless remote control interface 304, and control circuitry 306. Additionally, the translator 300 may include any one of a second wired media content interface 308, a third wired media content interface 308, a separate user interface 310, and a data interface 312. Additional possible aspects, such as a power supply, mechanical enclosure, and others, may be incorporated in the translator 300, but such aspects are not discussed extensively in order to simplify and focus the following discussion.

The wired media content interface 302 is configured to receive control commands 320 intended for a consumer device via a media content interface cable 314A. As described earlier, the media content interface cable 314A may be an HDMI cable, with the control commands 320 conforming to the HDMI CEC standard. In this case, the wired media content interface 302 is an HDMI, CEC-compliant interface. Typically, a consumer device, such as a set-top box, television, CD or DVD player, DVR unit, or the like, serves as the source of the control commands 320.

Further, the wired media content interface is configured to receive media content 330 from the source consumer device into the translator 300 (or, in other implementations, transmit media content from the translator 300 to the source consumer device). In the case of HDMI, the media content 330 may take the form of audio and/or video data packets conforming to one of the Motion Picture Experts Group (MPEG) formats, such as MPEG-2 or MPEG-4. Other media content interface standards, including varying media content data formats and related command protocols, may be utilized in other embodiments.

Also in the translator 300, the control circuitry 306 is configured to translate the received control command 320 into a wireless remote control command 322 compatible with another consumer device serving as the target of the wireless remote control command 322. Presumably, the target device is not configured to receive the control command 320 directly from the source device, likely because of a lack of a wired media content interface capable of receiving the control command 320. To this end, the control circuitry 306 may access a table or similar data structure associating the various control commands 320 to one or more wireless remote control commands 322 capable of carrying out the intended function of the received control command 320.

The control circuitry 306 is coupled with the wired media content interface 302 and the wireless remote control interface 304. The control circuitry 306 may include one or more processors, such as a microprocessor, microcontroller, or digital signal processor (DSP), configured to execute instructions directing the processor to perform the functions discussed more fully herein. The control circuitry 306 may also include memory or data storage adapted to contain such instructions. Such memory may also include data, such as the table mentioned above, to aid the control circuitry 306 in performing its translation function and related duties. In another implementation, the control circuitry 306 may be strictly hardware-based logic, or may include a combination of hardware, firmware, and/or software elements.

The wireless remote control interface 304 is configured to transmit the wireless remote control command 322 generated by the control circuitry 306 to the target consumer device. As a result, media content interface control commands 320 may ultimately be executed by devices not implementing a form of media content interface compatible with the wired commands 320 by way of a more commonly used wireless remote control interface. The wireless remote control interface 304 is configured to transmit (and also receive, depending on the implementation) wireless signals adapted to carry device commands. The wireless signals may include, for example, infrared (IR) signals or other optical signals, radio frequency (RF) signals, or acoustic signals. More specifically, the remote control interface 304 modulates a signal to yield the wireless remote control commands 322 so that they may be received, processed, and/or executed successfully by the target consumer device.

Presuming the remote control commands 322 are embodied as IR or other optical signals, the wireless remote control interface 304 may be designed to "blast" the wireless commands 322, or transmit the wireless commands 322 with sufficient intensity to allow the optical signals to be reflected by surrounding surfaces, such as walls and furniture so that the target consumer device may capture the commands 322 via its remote control interface without the benefit of direct line-of-sight between the translator 300 and the target consumer device. In another example, the wireless remote control interface 304 may include an optical "tether" or extension device configured to be positioned in direct line-of-sight of the remote control interface of the target device, thus allowing the remote control interface 304 to transmit the wireless commands 322 at a relatively low signal magnitude.

In several implementations, the translator 300 may include a second wired media content interface 308 configured to transfer the media content 330 received via the first wired media content interface 302 to the target consumer device over a second media content interface cable 314B. In another example, the media content 330 may be received at the second wired media content interface 308 and transmitted out the first wired media content interface 302. In one embodiment, the second wired media content interface 308 may also transfer any control commands 320 received via the first interface 302 over the same cable 314B. When passing from one of the wired interfaces 302, 308 to the other, the media content 330 and the control commands 320 may be merely passed through the translator 300 without any processing, or may be processed in some fashion, including signal regeneration, amplification, or the like. In one example, the second wired media content interface 308 is an HDMI to match the first wired media content interface 302. In another example, the second wired media content interface 308 may be any other audio and/or video content interface, such as an RF output, a composite or component video output with associated audio connections, or another type of content interface. In this case, the second wired media content interface 308 may include an HDMI decoder allowing the media content 330 received at the first wired media content interface 302 to be translated into media content 330 signals compatible with the particular media content output format employed for the second wired media content interface 308.

In another example, the translator 300 may include a third wired media content interface 309 to allow the translator 300 to be employed as a media content interface splitter. More specifically, the third wired media content interface 309 is configured to transfer the media content 330 received via the first wired media content interface 302 over a third media content interface cable 314C, thus allowing the content 330 to be transferred to two separate consumer devices.

Optionally, the translator 300 may include a separate user interface 310, such as a set of keys, switches, and the like, to allow a user to control various aspects of the translator 300. In another arrangement, the user interface 310 may be incorporated as part of the wireless remote control interface 304, thus allowing the user to provide input to the translator 300 via a separate remote control device associated with the translator 300. As shown in Fig. 3, one or more implementations may allow the user to provide input regarding an identification 340 of the target consumer device receiving the wireless remote control commands 322, and/or an identification 342 of a particular wireless remote control command 322. The control circuitry 306 may employ either type of information to associate specific control commands 320 received at the first wired media content interface 302 with particular wireless commands 322 to be transmitted to the target consumer device.

For example, the control circuitry 306 may utilize the receiving device identification 340 to determine which of several internally-stored tables to employ when associating a received control command 320 with one or more wireless commands 322 to be transmitted, with each table relating each possible received control command 320 with wireless commands 320 compatible with a specific target device. Thus, by providing the receiving device identification 340, a user may configure the translator 300 for a particular target device the user is employing at that time.

If, instead, the control circuitry 306 does not store a table correlated with the target consumer device currently being used, the user may indicate a particular wireless command via a wireless command identification 342. Thereafter, the user may then transmit a wireless command to the wireless remote control interface 304 from a remote control device (not shown in Fig. 3) associated with the target receiving device. For example, the wireless command identification 342 may indicate a "fast-forward" command, after which the user may initiate the fast-forward wireless command from a remote control device, thus "teaching" the control circuitry 306 the wireless command for the fast-forward function compatible with the target consumer device. By teaching multiple such commands to the control circuitry 306, the translator 300 may acquire the capability of translating each possible received control command 320 into the necessary wireless remote control commands 322 that will be transmitted to the target device.

In another arrangement, the translator 300 may include a data interface 312, such as a Universal Serial Bus (USB) connection, Ethernet connection, Wi-Fi connection, or other communication link configured to receive remote control command information 344 for one or more potential target devices. In one example, the remote control command information 344 for a particular target device associates each possible received control command 320 with one or more wireless remote control commands 322 compatible with the target device of interest. The control circuitry 306 may store such information 344 as a table, as described above, which the control circuitry 306 may consult when a control command 320 is received in order to generate the appropriate wireless remote control commands 322. Such data 344 for multiple target devices may be received via the data interface 312, stored or updated in memory, and utilized by the control circuitry 306 as described above. Any other data necessary for proper operation of the translator 300, such as execution software or firmware updates for the control circuitry 306, may also be received via the data interface 312 in other implementations.

The amount of electrical power required for a particular translator 300 may depend on at least the amount of functionality that translator 300 is configured to perform. As a result, those translators 300 consuming less electrical energy may be powered by way of one or more of the media content interface cables 314. For those consuming more energy, a separate power supply may be necessary. For example, the translator 300 may incorporate a direct current (DC) power jack designed to accept power from an external DC power supply. In other examples, the translator 300 may include its own power supply, thus employing an alternating current (AC) power cord to be plugged into a household AC power outlet. In yet other examples, the translator 300 may employ a rechargeable battery.

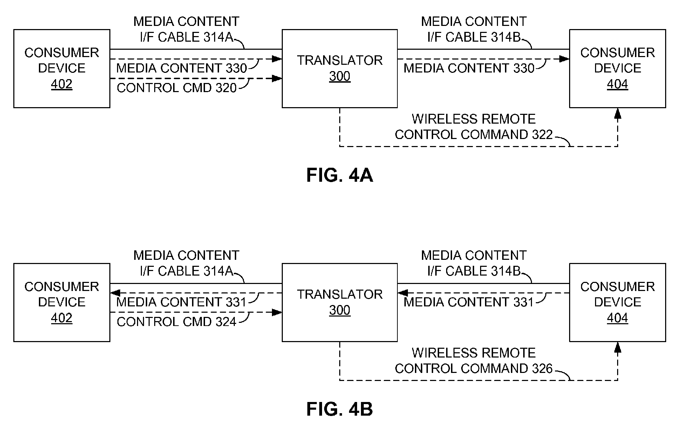

Figs. 4A through 4D provide non-exhaustive examples of how the translator 300 of Fig. 3 may operate in conjunction with two consumer devices 402, 404 operating within a single system, such as a home entertainment system. As noted above, each of the consumer devices 402, 404 may be, for example, a set-top box, television, CD or DVD player, DVR unit, gaming system, audio receiver, desktop or laptop computer, or any system that may transmit or receive media content by way of a wired interface, such as the media content interface cables 314A, 314B depicted in Figs. 4A through 4D. In these figures, the first consumer device 402 is capable of sending and receiving wired interface control commands via the media content interface cable 314A coupling the first consumer device 402 with the translator 300. Oppositely, the second consumer device 404 is incapable or sending or receiving such commands via the cable content interface cable 314B connecting the second consumer device 404 with the translator 300. In one example, the first media interface cable 314A is an HDMI cable, wherein the first consumer device 402 is capable of sending and receiving CEC control commands thereover. On the other hand, the second media content interface cable 314B may be an HDMI cable as well, but the second consumer device 404 is not adapted to send or receive CEC commands. In another example, the second media content interface cable 314B may be an RF interface cable, a component or composite video interface cable with associated audio connections, or another type of media interface cable 314B.

In Fig. 4A, the first consumer device 402 transfers media content 330 over the first media content interface cable 314A to the translator 300, which then transfers the media content 330 over the second media content interface cable 314B. Further, the first consumer device 402 transfers a control command 320 over the first media content interface cable 314A to the translator 300. As described above, the translator 300 generates at least one wireless remote control command 322 based on the received control command 320, with the wireless command 322 being compatible with the second consumer device 404. The translator 300 then transmits the wireless remote control command 322 to the second consumer device 404 for execution.

Similarly, the embodiment of Fig. 4B employs the same translation of a control command 324 received from the first consumer device 402 into a corresponding wireless remote control command 326 to be transmitted to the second consumer device 404. In this case, however, media content 331 is transferred from the second consumer device 404 to the first consumer device 402 via the second media content interface cable 314B, the translator 300, and the first media content interface cable 314A. For example, in Fig. 4A, the first consumer device 402 may be a set-top box transferring television programming to a television serving as the second consumer device 404, while in Fig. 4B, the second consumer device 404 may be the set-top box, and the first consumer device 402 may be the television.

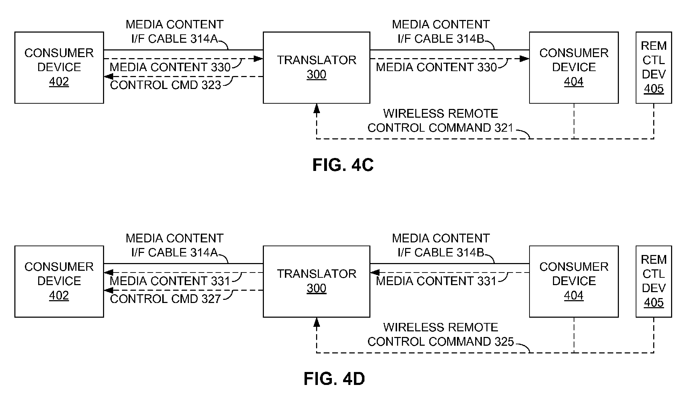

In the embodiments of Figs. 4C and 4D, the translator 300 is configured to receive a wireless remote control command 321, 325 compatible with the second consumer device 404. In one particular example, a translator 300 may receive the wireless remote control command 321 directly from a remote control device 405 associated with the second consumer device 404. For example, when a user employs the remote control device 405 to instruct the second consumer device 404 to perform a particular function, the translator 300 may receive that same wireless remote control command 328. In response, the translator 300 may then translate the received wireless command 321, 325 into a control command 323, 327 to be transmitted over the first media content interface cable 314A to the first consumer device 402. Thus, in the case a user prefers to use the remote control device 405 designed to control the second consumer device 404, which is not compatible with the control command aspects of the first media content interface cable 314A, control of the first consumer device 402 via the remote control device 405 of the second consumer device 404 is possible.

In another example, the second consumer device 404 may transmit the wireless remote control command 321. The second consumer device 404 may take this action after receiving the same or similar command 321 from the remote control device 405. The second consumer device 404 may perform this function if the wireless remote control command 321 is embodied in a format that is incompatible with the translator 300. For instance, the remote control device 405 may issue commands in RF signals. In response to receiving such a signal, the second consumer device 404 may retransmit the wireless command 321 as an IR signal suitable for reception at the translator 300. In this arrangement, the second consumer device 404 may transmit the wireless command 321 as an IR blast, or by way of an IR tether, as described more completely above.

The implementations of Figs. 4C and 4D are distinguished much in the same way that Figs. 4A and 4B contrast: by the direction in which the media content is transferred. More specifically, the first consumer device 402 transfer the media content 330 via the first media content interface cable 314A, the translator 300, and the second interface cable 314B to the second consumer device 404 in Fig. 4C, while the second consumer device 404 transfers the media content 331 to the first consumer device 402 in the opposing direction in Fig. 4D.

In embodiments in which the second media content interface cable 314B is not an HDMI cable connection, and is configured to receive the media content 331 from the second consumer device 404 (e.g., Figs. 4B and 4D), the second media content interface 308 associated with that cable 314B may include an HDMI encoder configured to encode the incoming media content 331 into HDMI format signals for compatibility with the HDMI cable serving as the first media content interface cable 314A. Thus, the control commands 324, 327 may be transmitted over the same cable 314A as the media content 331 being transferred to the first consumer device 402.

Depending on the embodiment, the standalone translator 300 may employ any or all of the embodiments described in Figs. 4A-4D. Other operational configurations, including, but not limited to, those that may include employing the translator 300 as a media content interface splitter, as described above, are also possible.

In yet other embodiments, the translator 300 may not depend upon an external stimulus, such as control commands 320, 324 of Figs. 4A and 4B to initiate the wireless commands 322, 326, or rely on the wireless remote control commands 321, 325 of Figs. 4C and 4D to initiate the control commands 323, 327, but instead provide those commands 322, 323, 326, 327 of its own accord. In just one example, the translator 300 may employ one or more timers in the control circuitry 306 to prompt unilateral action, such as to place one or more of the surrounding components 402, 404 into a low-power, or "standby", state after a period of command 320, 321, 324, 325 inactivity by way of the wired commands 323, 327 or wireless commands 322, 326. Other examples of the translator 300 taking unilateral action may be provided in other embodiments.

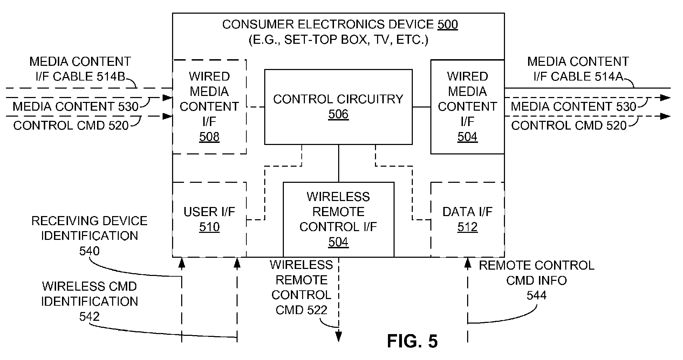

Fig. 5 depicts a consumer electronics device 500 that essentially incorporates at least some of the functionality of the standalone translator 300, thus allowing the consumer device 500 to control other consumer devices that are incompatible with a wired media content interface control mechanism, such as HDMI CEC. The consumer device 500 may be any consumer electronics device capable of incorporating a media content interface employing a control command bus or pathway, such as HDMI. Such devices 500 may include those already discussed above, such as set-top boxes, televisions, audio receivers, CD and DVD players, DVR devices, gaming systems, computers, and the like.

The consumer electronics device 500 of Fig. 5 may include many of the same functional portions described above with respect to the translator 300, such as a wireless remote control interface 502, one or more wired media content interfaces 504, 508, control circuitry 506, a user interface 510, and a data interface 512.

Additionally, other functional blocks of the consumer electronics device 500 may be included therein, depending on the primary functionality of the specific device 500. For example, presuming the consumer electronics device 500 is a television set-top box, the device 500 may include one or more tuners for receiving television programming from one or more selected broadcast programming channels, decrypting and decoding circuitry for extracting the programming of interest, an internal DVR unit for recording selected programs, and encoding circuitry for generating audio/video data for delivery to a television. Other consumer devices 500 may provide circuitry and logic for purposes specific to those devices 500 in much the same manner. Such functionality is not further described below to focus the discussion on the aspects of the device 500 pertaining to the transmission or reception of wireless remote control commands 522.

In the specific example of Fig. 5, the control circuit 506 is configured to generate a wireless remote control command 522, and transmit the command 522 via the wireless remote control interface 502 to a second consumer device (not shown in Fig. 5). Further, the control circuitry 506 may generate a related control command 520 for transmission via the wired media content interface 504 and a media content interface cable 514A, along with any media content 530 that may be transferred to the second consumer device. As a result, the consumer electronics 500 may be configured to transfer either the control command 520 to the second consumer device if that device is compatible with the control command mechanism provided over the media content interface cable 514A, or to transfer the wireless command 522 to the second device if that device is incapable of receiving the wired command 520 over the interface cable 514. In one implementation, both the wired command 520 and the wireless command 522 are transmitted, thus relieving the consumer device 500 and the user of determining the capabilities of the second consumer device.

In some embodiments, the user interface 510 may receive a wireless command identification 542 and/or a receiving device identification 540, thus providing information usable by the control circuitry 506 to generate the wireless remote control command 522, much in the same way the translator 300 of Fig. 3 may be configured to employ its wireless command identification 342 and receiving device identification 340. Further, the data interface 512 of the consumer electronics device 500 may facilitate the reception and processing of remote control command information 544 similar to the way in which the translator 300 may employ the remote control command information 344 received over its own data interface 312.

In one scenario, the generation of the wireless command 522 is initiated by way of the device 500 receiving a wireless command issued by a user via a remote control device configured to control the device 500. In response to receiving such a command, the control circuitry 506 may then generate the wired control command 520 and the wireless remote control command 522 based on the received command from the remote control device. In another case, the control circuitry may perform this command generation based on a second wired control command 520 received at the second wired media content interface 508 from a third consumer device via a second media content interface cable 514B. In addition, the second wired media content interface 508 may receive media content 530 over the same cable 514B, which may then be processed and forwarded to the second consumer device via the first wired media content interface 504.

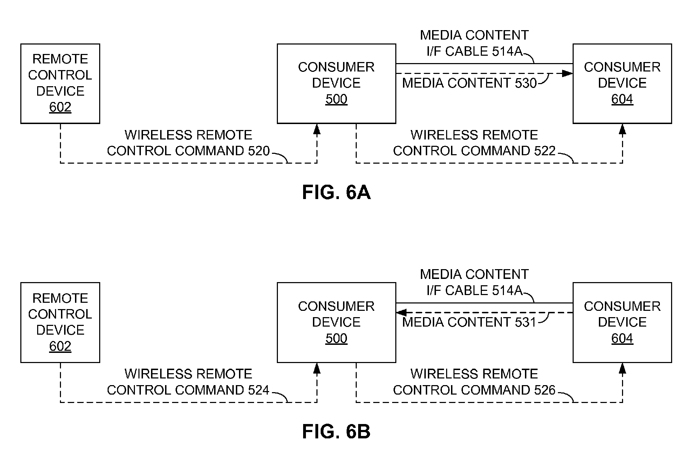

Figs. 6A and 6B portray scenarios alluded to above involving a remote control device 62. In both Figs. 6A and 6B, the remote control device 602 issues a wireless remote control command 520 to initiate a command or other operation within the consumer electronics device 500. In response, the consumer device 500 generates and transmits another wireless remote control command 522 destined for a second consumer device 604 based on the received wireless command 520. In Fig. 6A, the first consumer device 500 delivers media content 530 to the second consumer device 604 via the media content interface cable 514A. Oppositely, Fig. 6B depicts the second consumer device 604 supplying media content 531 over the media content interface cable 514A to the first device 500. In either scenario, the media content interface cable 514A may be associated with any interfacing medium capable of carrying the content 530, 531, including, but not limited to, an HDMI cable, a component or composite audio/video cable, and a coaxial cable.

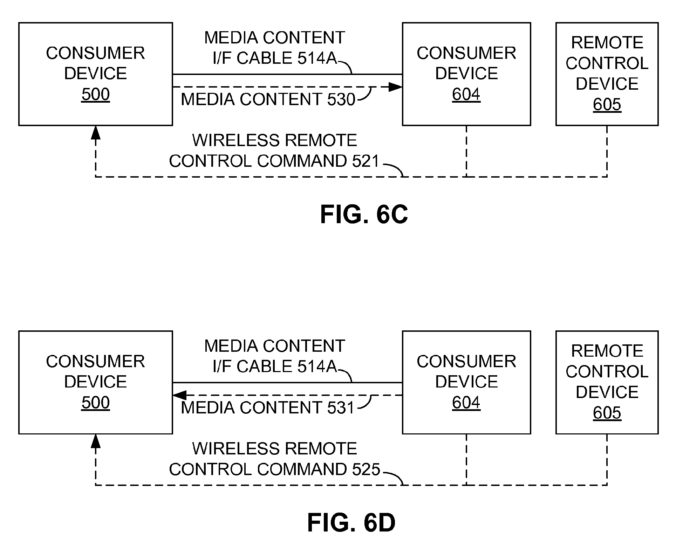

Figs. 6C and 6D address the possibility of the second consumer device 604 or a corresponding remote control device 605 transmitting a wireless remote control command 521, 525 to the first device 500 in a fashion analogous to that illustrated in Figs. 4C and 4D. Further, Fig. 6C shows media content 530 being transmitted over the media content interface cable 514A from the first consumer device 500 to the second device 604, while Fig. 6D portrays media content 531 being transferred over the cable 514A in the reverse direction. Other embodiments, such as those involving a third consumer device which may supply wired control commands over another media content interface cable to the first device 500, or which may receive such commands from the first device, are also possible using the electronics consumer device 500 depicted in Fig. 5. Further, similar to the translator 300, the consumer device 500 may also unilaterally issue the wireless commands 522, 526 of Figs. 6A and 6B to the second consumer device, or wired control commands to other consumer devices in the absence of any received commands, such as by way of timers or other means.

At least some embodiments as described herein thus allow a consumer electronics device, such as a set-top box, a television, or the like, to transmit or receive commands associated with a media content control bus, such as the CEC signals of the HDMI standard, to or from another consumer device not compatible with such a bus. Such incompatibility at the other device may include a lack of an HDMI connector, or an implementation of the HDMI that either does not employ CEC at all, or only utilizes some subset thereof. This overall functionality may be provided in a standalone translator device designed to communicatively couple the first and second devices, or may be incorporated within one of the devices. Further, the translator function may be further expanded to issue commands to one or more consumer devices without being initiated by an incoming control bus command.

While several embodiments of the invention have been discussed herein, other implementations encompassed by the scope of the invention are possible. For example, while various embodiments have been described within the context of a television set-top box and other entertainment electronics components, the design of other types of electronic systems that provide a mixture of wired and wireless command interface technologies may employ various aspects of the systems and methods described above to facilitate control command transfer among the devices. In addition, aspects of one embodiment disclosed herein may be combined with those of alternative embodiments to create further implementations of the present invention. Thus, while the present invention has been described in the context of specific embodiments, such descriptions are provided for illustration and not limitation. Accordingly, the proper scope of the present invention is delimited only by the following claims and their equivalents.

## Claims

1. A method of facilitating consumer device control bus functionality, the method comprising:
receiving a consumer device control bus command from a first electronic device;
translating the consumer device control bus command into a wireless remote control command compatible with a second electronic device; and
transmitting the wireless remote control command to the second electronic device.

2. The method of claim 1, wherein:
translating the consumer device control bus command and transmitting the wireless remote control command occur within the first electronic device.

3. The method of claim 1 or 2 wherein:
the consumer device control bus command is received via a first media content interface connection; and
the method further comprises receiving media content over the first media content interface connection, and forwarding the media content over a second media content interface connection to the second electronic device;
and wherein, optionally, translating the second wireless remote control command and transmitting the second consumer device control bus command occur within the first electronic device.

4. The method of claim 1, 2 or 3 further comprising:
receiving a second wireless remote control command;
translating the second wireless remote control command into a second consumer device control bus command compatible with the first electronic device; and
transmitting the second consumer device control bus command to the first electronic device;
and wherein
receiving the second wireless remote control command optionally comprises receiving the second wireless remote control command from a remote control device.

5. The method of claim 4, further comprising:
receiving an identification of an electronic device associated with the remote control device;
wherein translating the second wireless remote control into a second consumer device control bus command is based on the identification of the electronic device associated with remote control device.

6. The method of any of claims 1 to 5, further comprising:
receiving an identification of the second electronic device;
wherein translating the consumer device control bus command into the wireless remote control command is based on the identification of the second electronic device.

7. The method of any of claims 1 to 6, further comprising:
receiving the wireless remote control command and an identification of the wireless remote control command;
associating the wireless remote control command with the identification of the wireless remote control command;
wherein translating the consumer device control bus command into the wireless remote control command is based on the identification of the wireless remote control command.

8. A consumer device control command translator, comprising:
a wired media content interface;
a wireless remote control interface; and
control circuitry configured to:
receive from a first electronic device via the wired media content interface a control command;
translate the control command into a wireless remote control command; and
transmit the wireless remote control command via the wireless remote control interface to a second electronic device.

9. The translator of claim 8, wherein:
the translator comprises a second media content interface; and
the control circuitry is configured to transfer media content received at the first media content interface to the second electronic device via the second media content interface.

10. The translator of claim 8, or 9, wherein:
the media content interface comprises a High Definition Multimedia Interface; and
the control command received via the wired media content interface comprises a High Definition Multimedia Interface Consumer Electronics Control command.

11. The translator of any of claims 8 to 10, wherein:
the control circuitry is configured to receive a second wireless remote control command to perform a second function, to translate the second wireless remote control command into a second command compatible with the wired media content interface, and to transfer the second command via the wired media content interface.

12. The translator of claim 13, further comprising:
a user interface;
wherein the control circuitry is configured to receive via the user interface an identification of the second electronic device; and
wherein the translation of the second wireless remote control command into the second command compatible with the wired media content interface is based on the identification of the second electronic device.

13. The translator of any of claims 8 to 12, further comprising:
a user interface;
wherein the control circuitry is configured to receive via the user interface an identification of the second electronic device; and
wherein the translation of the control command received via the wired media content interface into the wireless remote control command is based on the identification of the second electronic device.

14. The translator of any of claims 8 to 13, further comprising:
a user interface;
wherein the control circuitry is configured to receive via the user interface an identification of the wireless remote control command, to receive via the wireless remote control interface the wireless remote control command, and to associate the wireless remote control command with the identification of the wireless remote control command; and
wherein the translation of the control command received via the wired media content interface into the wireless remote control command is based on the identification of the wireless remote control command.

15. A consumer electronics device, comprising:
a wired media content interface configured to transfer media content to or from a second consumer electronics device;
a wireless remote control interface; and
control circuitry configured to:
generate a wireless remote control command for a second consumer electronics device; and
transmit the wireless remote control command via the wireless remote control interface to the second consumer electronics device.

16. The device of claim 15, further comprising:
a second wired media content interface;
wherein the control circuitry is configured to receive a control command from a third consumer electronics device, and to generate the wireless remote control command based on the received control command.
